# EUROPEAN PATENT APPLICATION

(11) **EP 4 397 590 A1**
(43) Date of publication of application: **10.07.2024**
(21) Application number: 23213248.0
(22) Date of filing: 30.11.2023
(51) Int. Cl.: B64D 11/00, B60R 5/00

(54) **SINGLE SOLUTION FOR STOWAGE BIN RELATED ISSUES**

(30) Priority: 04.01.2023 IN 202341000602; 24.03.2023 US 202318189372
(71) Applicant: B/E Aerospace, Inc., Winston-Salem, NC 27105 (US)
(72) Inventor: KANDUKURI, Ravindra R., 500009 Secunderabad, TS (IN)
(74) Representative: Dehns

(57) **Abstract**

An overhead stowage bin is disclosed herein. The overhead stowage bin includes a top panel (304a), a bottom panel (304b), a back panel (304d), and a plurality of side panels configured to define a volume to stow luggage, a door configured to close the stowage bin, and a window disposed within the door, the window configured to transition between an opaque state and a transparent state.

## Description

### CROSS-REFERENCE TO RELATED APPLICATIONS

This application claims priority to, and the benefit of, India Patent Application No. 202341000602 (DAS CODE: 67EE), filed January 4, 2023, and titled "SINGLE SOLUTION FOR STOWAGE BIN RELATED ISSUES."

### FIELD

The present disclosure relates to stowage compartments, and, more specifically, to overhead stowage bins for aircraft.

### BACKGROUND

Aircrafts generally include overhead stowage bins for passengers to stow their carry-on luggage during flight. During boarding, cabin crew and passengers are unable to see whether an overhead stowage bin is empty or full when the stowage bin is closed. Carry-on items stowed in the overhead stowage bin may shift during flight. Improper stowage of luggage may cause a variety of in-flight injuries to the passengers on board, particularly head injuries, neck fracture and more severe injuries if the bags fall with enough force. Most commercial aircraft have a weight limit (e.g., 40 lbs. (18 kg), 15 lbs. (7 kg), etc.), which is potentially sufficient to cause serious issues to passengers and attendants. While stowing the luggage may be secured with a proper procedure, due to normal flight maneuvers, items may shift and which in turn may fall out when the bins are opened. Cabin crew and passengers are unable to see how the luggage shifted during the flight without opening the stowage bin, which may result in injuries. Furthermore, cabin crew may shift carry-ons from one bin to another bin to maximize the number of carry-on items stored and optimized space usage in the stowage bins to accommodate the carry-ons of passengers boarding at the last moment. Cabin crew generally open multiple stowage bins to check space and availability within the stowage bins.

### SUMMARY

Disclosed herein is an overhead stowage bin including a top panel, a bottom panel, a back panel, and a plurality of side panels configured to define a volume to stow luggage. The overhead stowage bin further includes a door configured to close the overhead stowage bin, and a window disposed within the door, the window configured to transition between an opaque state and a transparent state.

In various embodiments, the window includes a polymer dispersed liquid crystal film that is configured to transition from the transparent state to the opaque state in response to application of an electric current. In various embodiments, the window includes a suspended-particle device that is configured to transition from the transparent state to the opaque state in response to application of an electric current.

In various embodiments, the overhead stowage bin further includes a button coupled to the overhead stowage bin and a controller coupled to the overhead stowage bin and in communication with the controller, wherein the controller is configured to at least one of apply or remove an electric current to the window in response to the button being pressed. In various embodiments, the controller is further configured to receive a signal from a central controller, the signal providing an indication to the controller to at least one of apply or remove the electric current to the window. In various embodiments, the controller is further configured to provide an indication of a state of the window to a central controller. In various embodiments, the window is configured to default to the transparent state.

Also disclosed herein is an overhead stowage bin section including a first stowage bin, a second stowage bin, a first window, and a second window. The first stowage bin including a first door, a first top panel, a first bottom panel, a first side panel, and a second side panel configured to define a first volume for stowing luggage. The second stowage bin including a second door, a second top panel, a second bottom panel, the first side panel, and a third side panel configured to define a second volume for stowing luggage. The first window disposed in the first door, the first window configured to transition from a first state to a second state. The second window disposed in the second door, the second window configured to transition from the first state to the second state.

In various embodiments, the first state is a transparent state and the second state is an opaque state. In various embodiments, the first window includes a polymer dispersed liquid crystal film that is configured to transition from the transparent state to the opaque state in response to application of an electric current. In various embodiments, the overhead stowage bin section further includes a first control button and a first controller configured to control a state of the first window, the first controller sending a current to the first window in response to the first control button being pressed a first time. In various embodiments, the first controller is further configured to stop sending the current to the first window in response to the first control button being pressed a second time.

In various embodiments, the overhead stowage bin section further includes a second control button and a second controller configured to control a state of the second window, the second controller being configured to send the current to the second window in response to the second control button being pressed. In various embodiments, the second controller is configured to receive a signal from a central controller and send the current to the second window in response to receiving the signal.

Also disclosed herein is a system including a first overhead stowage bin including a first door having a first window, wherein the first window is configured to transition between a first transparency state and a second transparency state, a first controller configured to control the transition of the first window, a stowage bin controller, a processor, and a memory operatively coupled to the processor. The memory comprising instructions stored thereon that, when executed by the processor, cause the processor to receive a first request from the stowage bin controller to change a state of the first window, send a second request to the first controller to transition the first window from the first transparency state to the second transparency state, receive a first response from the first controller indicating the state of the first window, and send a first confirmation to the stowage bin controller.

In various embodiments, the system further includes a second overhead stowage bin including a second door having a second window, wherein the second window is configured to transition between the first transparency state and the second transparency state and a second controller configured to control the transition of the second window. The instructions, when executed by the processor, further cause the processor to receive a third request from the stowage bin controller to change the state of the second window, send a fourth request to the second controller to transition the second window from the first transparency state to the second transparency state, receive a second response from the second controller indicating the state of the second window, and send a second confirmation to the stowage bin controller.

In various embodiments, the first transparency state is a transparent state and the second transparency state is an opaque state. In various embodiments, the stowage bin controller is a pilot controller in a cockpit of an aircraft. In various embodiments, the stowage bin controller is a flight attendant controller in an aircraft. In various embodiments, the system further includes a first transparent shield disposed over a first side of the first window and a second transparent shield disposed over a second side of the first window, the second side being opposite the first side.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an aircraft and various sections within the aircraft, in accordance with various embodiments.
FIG. 2 illustrates a cabin of an aircraft, in accordance with various embodiments.
FIGS. 3A and 3B illustrate a stowage bin including a smart glass window, in accordance with various embodiments.
FIG. 4 illustrates a stowage bin including a smart glass windows, in accordance with various embodiments.
FIG. 5 illustrates a control system for controlling smart glass windows of stowage bins, in accordance with various embodiments.
FIG. 6 illustrates a control flow of controlling one or more stowage bins having smart glass windows, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein is an aircraft overhead bin system including a smart glass window. The overhead bin system may replace existing overhead bin systems and may function similar to existing overhead bin system including having a frame for storing luggage and a door for closing the bin. In various embodiments, a portion of the door may include a window that may be made from a material that can transition between being transparent and opaque, such as for example, a polymer dispersed liquid crystal (PDLC) film, smart window tint, window privacy film, electronic window tint, phase-changing polymer (PCP), or suspended-particle devices (SPDs), among others. In various embodiments, the entire door may be comprised of one or more windows and may be made from the material that can selectively transition between being transparent and opaque. In various embodiments, the door may further include a button, switch, toggle or other device to transition the material between transparent and opaque. In various embodiments, the overhead bin system may further include a central controller coupled to the button, switch, toggle or other device to control the state of the window. In various embodiments, each door may further include a door controller coupled to the button, switch, toggle or other device and configured to control the window. In various embodiments each door controller may be coupled to the central controller to send and receive status messages and control commands. In various embodiments, the central controller may control each door processor collectively or individually.

Including the window in the door of the overhead storage bin reduces the number of times a storage bin is opened to check for empty space. Furthermore, the window improves the safety of the passengers and cabin crew by reducing the chance of injury due to items shifting during flight. The passenger and/or cabin crew may see that an item has the potential to fall before opening the door of the storage bin. Additionally, this system may replace existing systems with little to no modification to the aircraft while being cheaper than existing solutions to the problem of luggage shifting during flight.

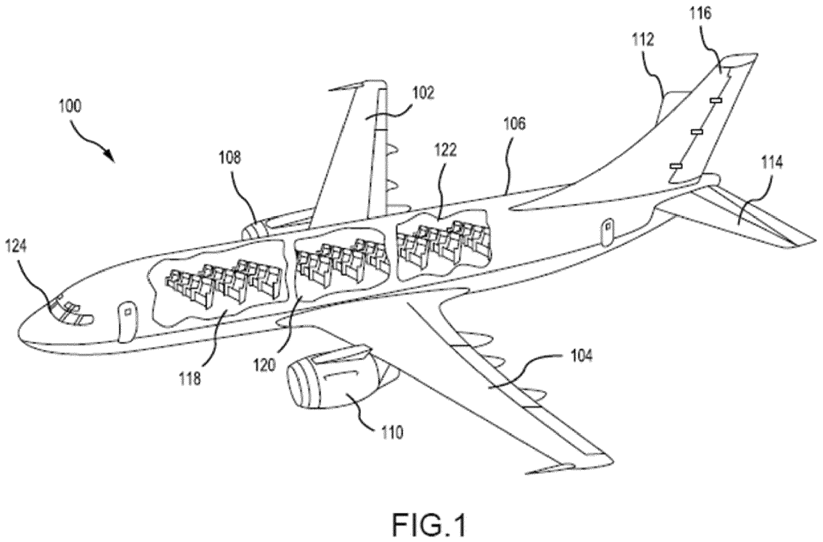

Referring now to FIG. 1, an aircraft 100 and various sections within the aircraft is illustrated, in accordance with various embodiments. In various embodiments, the aircraft 100 has a starboard wing 102 and a port wing 104 attached to a fuselage 106. In various embodiments, the aircraft 100 also includes a starboard engine 108 connected to the starboard wing 102 and a port engine 110 connected to the port wing 104. In various embodiments, the aircraft 100 also includes a starboard horizontal stabilizer 112, a port horizontal stabilizer 114, and a vertical stabilizer 116. In various embodiments, the aircraft 100 also includes various cabin sections, including, for example, a first cabin section 118, a second cabin section 120, a third cabin section 122, and a pilot cabin 124.

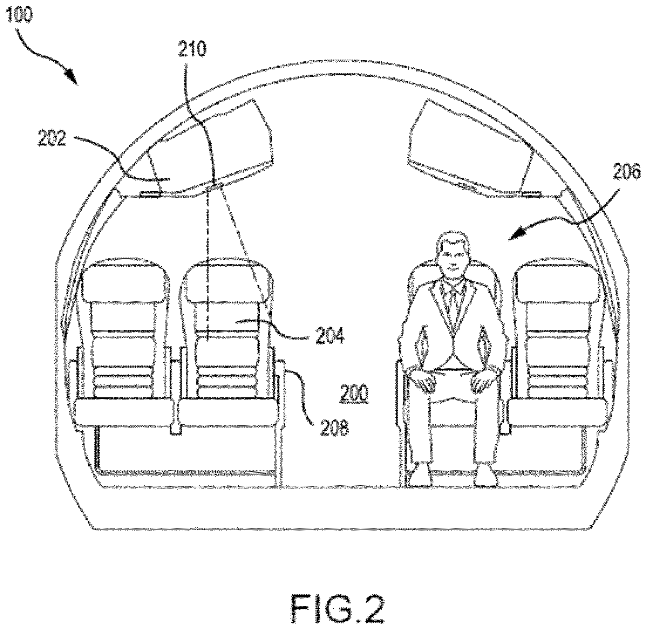

Referring now to FIG. 2, a cabin of an aircraft 100 is illustrated. Cabin 200 may be a cabin such as the first cabin section 118, the second cabin section 120, or the third cabin section 122 of FIG. 1, in accordance with various embodiments. In various embodiments, the cabin 200 may include overhead storage bins 202, passenger seats 204 for supporting passengers 206, armrest 208, lavatory surfaces, Portable Electronic Devices, and other structures/surfaces.

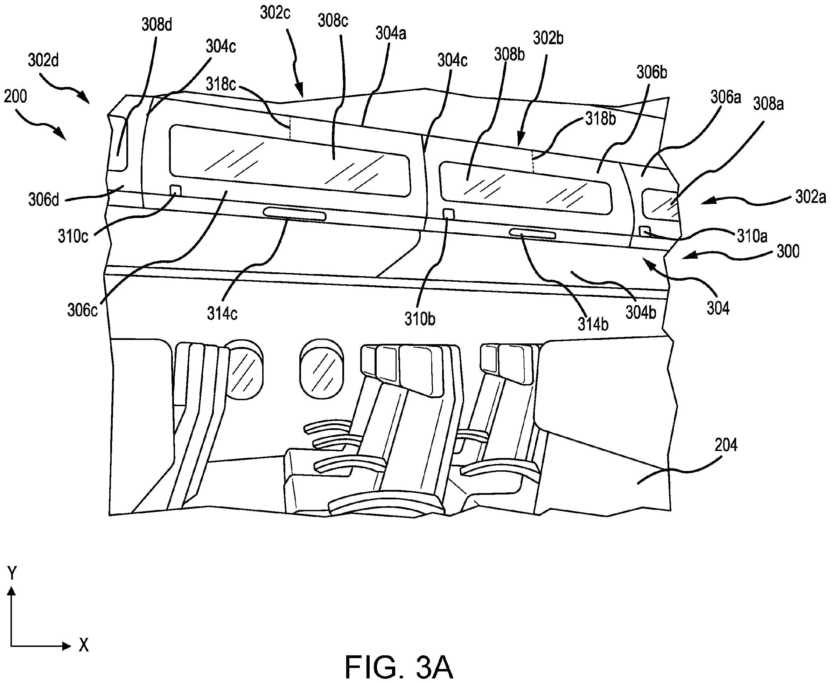

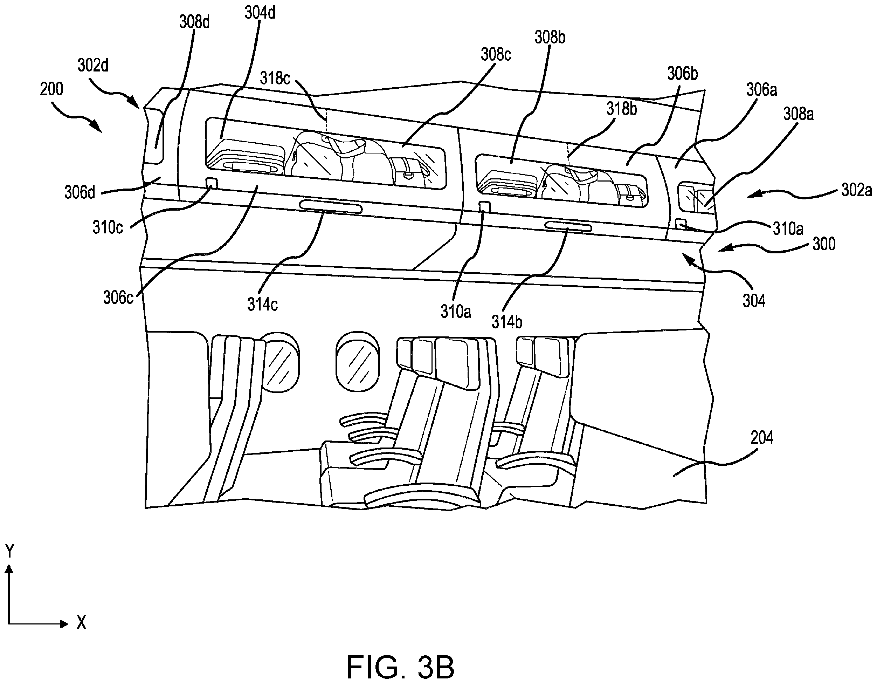

Referring now to FIGS. 3A and 3B, a stowage bin section 300 in cabin 200 of aircraft 100 is illustrated, in accordance with various embodiments. Illustrated are portions of four stowage bins in stowage bin section 300, specifically, a first stowage bin 302a, a second stowage bin 302b, a third stowage bin 302c, and a fourth stowage bin 302d. Stowage bins 302a-302d include a frame 304 that defines a top panel 304a, a bottom panel 304b, two side panels 304c (e.g., between each stowage bin 302a-302d), and a back panel 304d for each stowage bin 302a-302d that define a luggage compartment. First stowage bin 302a further includes a first door 306a, a first window 308a disposed in first door 306a, a first control button 310a, and a first handle. Second stowage bin 302b further includes a second door 306b, a second window 308b disposed in second door 306b, a second control button 310b, and a second handle 314b. Third stowage bin 302c further includes a third door 306c, a third window 308c disposed in third door 306c, a third control button 310c, and a third handle 314c. Fourth stowage bin 302d further includes a fourth door 306d, a fourth window 308d disposed in fourth door 306d, a fourth control button 310d, and a fourth handle 314d. It is understood that all overhead stowage bins in cabin 200 may include similar features and that the illustrated portion is truncated for ease of description.

Each window 308a-308d may include smart glass that is configured to selectively transition between an opaque state and a transparent state based upon an application of an electric current. In various embodiments, the smart glass may include such as for example, a polymer dispersed liquid crystal (PDLC) film, smart window tint, window privacy film, electronic window tint, phase-changing polymer (PCP), or suspended-particle devices (SPDs), among others. Accordingly, FIG. 3A illustrates windows 308a-308d in the opaque state, similar to current overhead stowage bins. FIG. 3B illustrates windows 308a-308d in the transparent state, where stored luggage is visible. When in the transparent state, windows 308a-308d may provide a visual indication of the status of each stowage bin 302a-302d when their respective doors 306a-306d are closed. That is, passengers and crew members may be able to determine whether the stowage bin 302a-302b is full and/or whether the luggage in the stowage bin 302a-302b has shifted during flight. Being able to see the status of the stowage bin (e.g., 302a-302b), including luggage status, may improve the efficiency of boarding and exiting cabin 200 and optimize the space utilization of stowage bins during boarding. Furthermore, there may be a reduction injuries caused by falling luggage when passengers and/or crew members are able to identify luggage that is likely to fall prior to opening the door (e.g., doors 306a-306b.) In various embodiments, a transparency shield may be placed on each of window 308a-308d. For example, the transparency shield may include a first shatter proof transparent material disposed on the exterior side of window 308a-308d (e.g., cabin side) and a second shatter proof transparent material disposed on the interior side of windows 308a-308d (e.g., luggage side).

In various embodiments, windows 308a-308d may default to the transparent state where there is little to no electric current applied. That is, each window 308a-308d may be transparent in the absence of electricity, thereby improving safety and efficiency when aircraft 100 is powered off, such as during boarding. Windows 308a-308d may be automatically transitioned to the opaque state during takeoff and during the flight. In the illustrated embodiment, second handle 314b and third handle 314c are located on second door 306b and third door 306c, respectively, and below second window 308b and third window 308c, respectively.

Stowage bins 302a-302d further includes power and communication lines 318, with second line 318b and third line 318c visible in the depicted embodiment of FIGS. 3A and 3B. Window 308a is coupled to a power source and a controller by a first line, second window 308b is coupled to the power source and the controller by a second line 318b, third window 308c is coupled to the power source and the controller by a third line 318c, and fourth window 308d is coupled to the power source and the controller by a fourth line. In various embodiments, the controller is a central controller that controls each window 308a-308d. In various embodiments, each window 308a-308d may be coupled to a local controller, one for each window, and each local controller communicates with a central controller.

Utilizing the controller, either centrally or locally, each window 308a-308d may be controlled either remotely or locally. For example, each window 308a-308d may be controlled by a flight attendant control panel, a flight attendant smart phone or tablet application, and/or a pilot control in the cockpit, among other controls. In various embodiments, the controls may be capable of controlling all windows, including windows 308a-308d, collectively. In various embodiments, the controls may be capable of controlling each window, including windows 308a-308d, individually. In various embodiments, the controls may be capable of both collective and individual control of windows 308a-308d.

Local control of windows 308a-308d may be achieved using first control button 310a, second control button 310b, third control button 310c, and fourth control button. In various embodiments, control buttons 310a-310c may be a toggle switch to alternate window 308a-308d between the transparent state and the opaque state. In various embodiments, first control button 310a may include more than one button, such that a first button changes window 308a to the transparent state and a second button changes second window 308b to the opaque state.

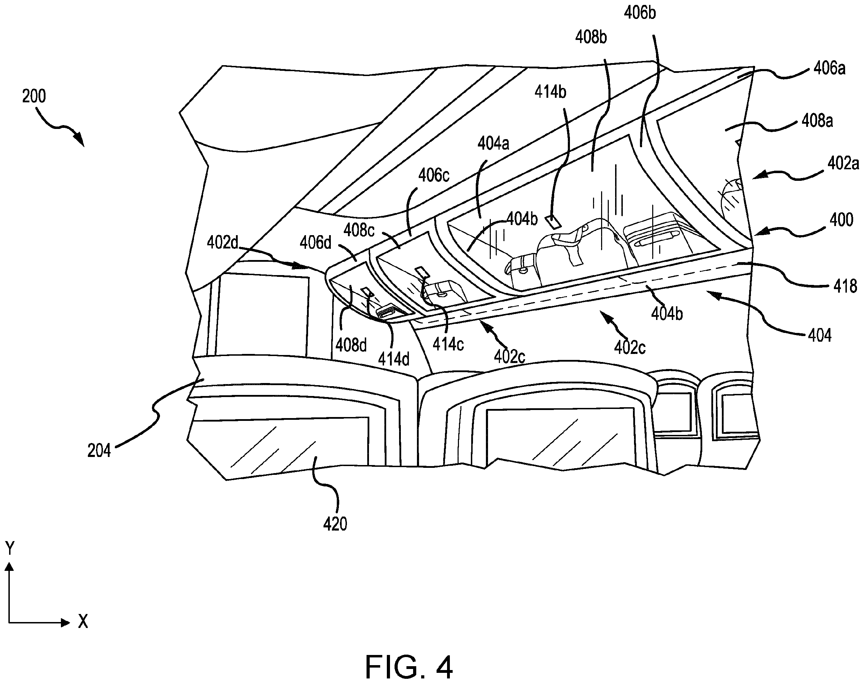

Referring now to FIG. 4, a stowage bin section 400 in cabin 200 of aircraft 100 is illustrated, in accordance with various embodiments. Illustrated are portions of four stowage bins in stowage bin section 400, specifically, a first stowage bin 402a, a second stowage bin 402b, a third stowage bin 402c, and a fourth stowage bin 402d. Stowage bin section 400, and stowage bins 402a-402d, include similar components to stowage bin section 300, and stowage bins 302a-302d, including a frame 404, a first door 406a, a second door 406b, a third door 406c, and a fourth door 406d, a first window 408a, a second window 408b, a third window 408c, fourth window 408d, and a handle (e.g., handle 414b, 414c, and 414d) for each door 406a-406d. In various embodiments, each handle (e.g., handle 414b, 414c, and 414d) may be integrated into the respective window (e.g., window 408b, 408c, and 408d). Each stowage bin 402a-402d may further include a top portion 404a, a bottom portion 404b, and two side portions 404c dividing each stowage bin 402a-402d. Top portion 404a, bottom portion 404b, side portions 404c, and each door 406a-406d define a luggage storage compartment for each stowage bin 402a-402d.

Each window 408a-408d may include smart glass that is configured to transition between an opaque state and a transparent state based on an electric current. In various embodiments, the smart glass may include such as for example, a polymer dispersed liquid crystal (PDLC) film, smart window tint, window privacy film, electronic window tint, phase-changing polymer (PCP), or suspended-particle devices (SPDs), among others.

Additionally, stowage bin section 400 includes a power and communication line (or bus) 418 that connects to each window 408a-408d. Each window 408a-408d may be controlled in the same manner as described above with respect to stowage bin section 300 in FIGS. 3A and 3B.

In various embodiments, windows 408a-408d may use a different percentage of each respective door 406a-406d. In various embodiments, windows 408a-408d may not be center aligned within doors 406a-406d. In various embodiments, windows 408a-408d may be positioned in different locations of doors 406a-406d. For example, as illustrated in FIGS. 3A and 3B, windows 308a-308b are placed in the center of doors 306a-306d and have a thicker border around windows 308a-308d than windows 408a-408d illustrated in FIG. 4. In various embodiments, stowage bin section 400 may further include a transparent shield disposed on the outside of each window 408a-408d (e.g., the cabin side) and the inside of each window 408a-408d (e.g., the luggage side).

Cabin 200 illustrated in FIG. 4 further includes an inflight entertainment center in each seat 204. In various embodiments, the inflight entertainment center may be used to control the state of each window 408a-408b. For example, as previously described with respect to windows 308a-308d, windows 408a-408d may transition from an opaque state to a transparent state based on an electric current provided to each window 408a-408d. In various embodiments, a default state (i.e., without power) may be transparent to facilitate loading and unloading passengers when aircraft 100 is on the ground and may not have power. In various embodiments, each inflight entertainment unit may have restricted controls to be utilized for the stowage bin section 400 window (e.g., windows 408a) located above the inflight entertainment center.

Each stowage bin 402a-402d of stowage bin section 400 may be assembled separately and connect to one another using quick connectors to allow power and communication to reach each door 406a-406d and window 408a-408d.

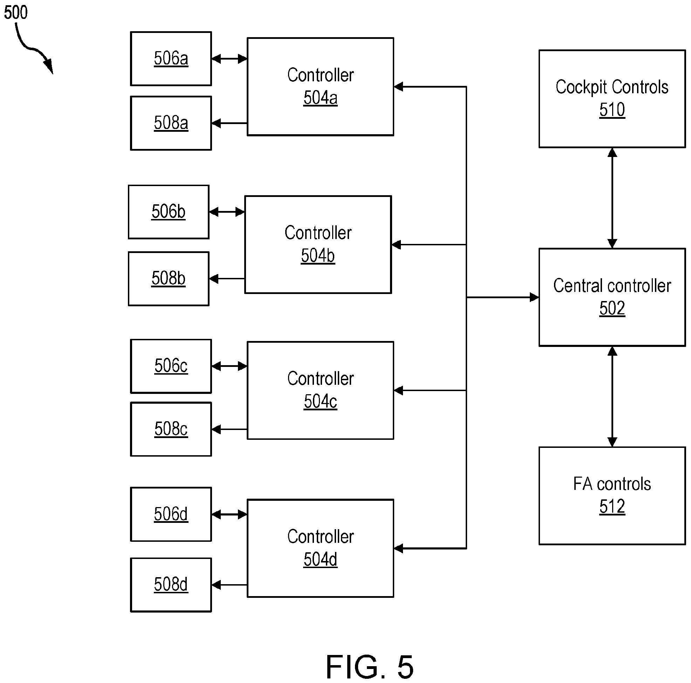

Referring now to FIG. 5, a system 500 for controlling stowage bin windows is illustrated, in accordance with various embodiments. System 500 may be used to control either stowage bin section 300 or stowage bin section 400. System 500 includes a central controller 502, a window controller 504a-504d associated with each window 508a-508d, a local control 506a-506d associated with each window controller 504a-504d, cockpit controls 510, and flight attendant controls 512. In various embodiments, local control 506a-506b may be an example of control buttons 310a-310c as described above with respect to FIGS. 3A and 3B. In various embodiments, local control 506a-506d may be an example of controls in inflight entertainment center 420 described above with respect to FIG. 4. In various embodiments, windows 508a-508d may be an example of windows 308a-308d described above with respect to FIGS. 3A and 3B. In various embodiments, windows 508a-508d may be an example of windows 408a-408d described above with respect to FIG. 4.

Central controller 502 may comprise one or more processors configured to implement various logical operations in response to execution of instructions, for example, instructions stored on a non-transitory, tangible, computer-readable medium. The one or more processors can be a general purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. Central controller 502 may further comprise memory to store data, executable instructions, system program instructions, and/or controller instructions to implement the control logic of central controller 502.

Each of controller 504a-504d may comprise one or more processors configured to implement various logical operations in response to execution of instructions, for example, instructions stored on a non-transitory, tangible, computer-readable medium. The one or more processors can be a general purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. Each of controller 504a-504d may further comprise memory to store data, executable instructions, system program instructions, and/or controller instructions to implement the control logic of controllers 504a-504d.

Central controller 502 communicates with each controller 504a-504d to send commands and receive status from for each window 508a-508d. Central controller 502 may also communicate with cockpit controls 510 and flight attendant controls 512 to provide the state of each window 508a-508d and controls to change the state of each window 508a-508d. Central controller 502 may communicate with each controller 504a-504d individually to control each window 508a-508d individually or to control the windows 508a-508d collectively.

This control provides flexibility during boarding, taxiing, take off, flight, landing, and deplaning. In various embodiments, central controller 502 may set the state of one or more windows 508a-508d to either transparent or opaque based on a state during flight. For example, central controller 502 may set the state of each window 508a-508d to transparent during the boarding process and transition each window 508a-508d to opaque during taxi in preparation for takeoff. In various embodiments, central controller 502 may disable local controls during certain periods of flight such as take off and landing. In various embodiments, central controller 502 may alert the cockpit crew and flight attendants to an attempt to locally change the state of one of windows 508a-508b using local controls 506a-506d. Similarly, central controller 502 may set the state of each window 508a-508b to transparent after landing to ensure that passengers and cabin crew are able to see the luggage in the stowage bins. Each of the transitions and commands mentioned above may be accomplished by central controller 502 communicating with each controller 504a-504d to perform each task. Communication between controllers may be over ethernet, serial peripheral interface (SPI), or controller area network (CAN), among other communication protocols.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

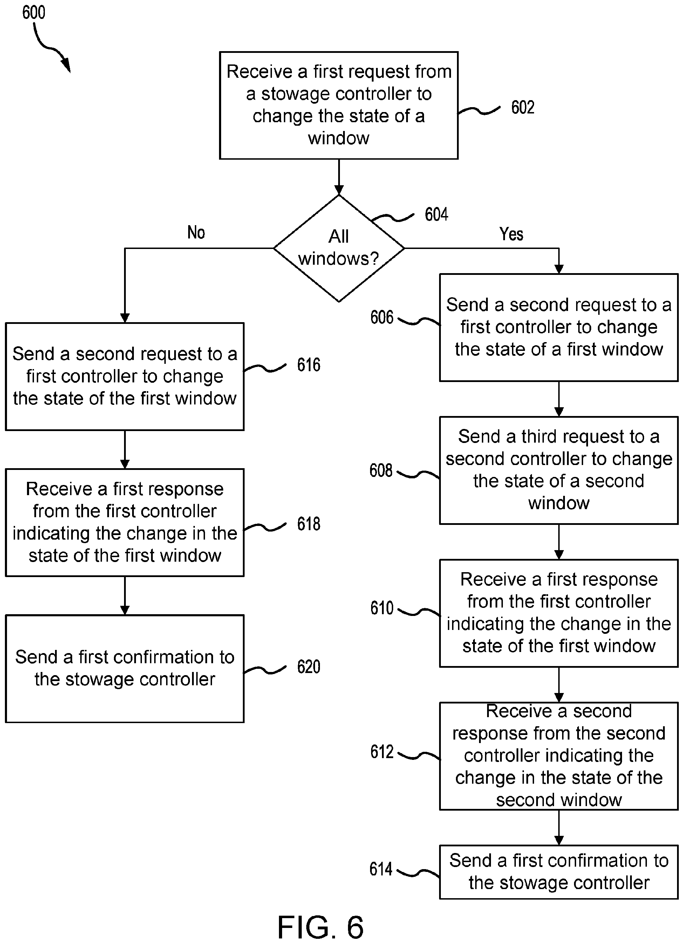

Referring now to FIG. 6, a method 600 for controlling a stowage bin section including a plurality of stowage bins is illustrated. The plurality of stowage bins includes a plurality of controllers and a plurality of windows. In various embodiments, the stowage bin section may be an example of stowage bin section 300 and the plurality of stowage bins may be examples of stowage bins 302a-302d described above with respect to FIGS. 3A and 3B. In various embodiments, the stowage bin section may be an example of stowage bin section 400 and the plurality of stowage bins may be examples of stowage bins 402a-402d described above with respect to FIGS. 4. In various embodiments, the steps of method 600 may be performed by a controller, such as for example, central controller 502 described above with respect to FIG. 5

At block 602, central controller 502 receives a first request from a stowage controller to change the state of a window. At decision block 604, central controller 502 determines whether the request is intended for all windows in the stowage bin section. If it is determined that the request is intended for all windows, method 600 proceeds to block 606. At block 606, central controller 502 sends a second request to a first controller of the plurality of controllers to change the state of a first window of the plurality of windows. At block 608, central controller 502 sends a third request to a second controller of the plurality of controllers to change the state of a second window of the plurality of windows. At block 610, central controller 502 receives a first response from the first controller indicating the change in the state of the first window. At block 612, central controller 502 receives a second response from the second controller indicating the change in state of the second window. At block 614, central controller 502 sends a first confirmation to the stowage controller.

Returning to decision block 604, if instead, it is determined that request is intended for a single window, method 600 proceeds to block 616. At block 616, central controller 502 sends a second request to a first controller of the plurality of controllers to change the state of a first window of the plurality of windows. At block 618, central controller 502 receives a first response from the first controller indicating the change in the state of the first window. At block 620, central controller 502 central controller 502 sends a first confirmation to the stowage controller.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1 % of, and within 0.01% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. An overhead stowage bin, comprising:
a top panel (304a), a bottom panel (304b), a back panel (304d), and a plurality of side panels (304c) configured to define a volume to stow luggage;
a door (306a) configured to close the overhead stowage bin; and
a window disposed within the door, the window configured to transition between an opaque state and a transparent state.

2. The overhead stowage bin of claim 1, wherein the window includes a polymer dispersed liquid crystal film that is configured to transition from the transparent state to the opaque state in response to application of an electric current, or wherein the window includes a suspended-particle device that is configured to transition from the transparent state to the opaque state in response to application of an electric current.

3. The overhead stowage bin of claim 1 or 2, further comprising:
a button (310a) coupled to the overhead stowage bin; and
a controller coupled to the overhead stowage bin and in communication with the controller, wherein the controller is configured to at least one of apply or remove an electric current to the window in response to the button being pressed.

4. The overhead stowage bin of claim 3, wherein the controller is further configured to receive a signal from a central controller, the signal providing an indication to the controller to at least one of apply or remove the electric current to the window, or . wherein the controller is further configured to provide an indication of a state of the window to a central controller.

5. The overhead stowage bin of any preceding claim, wherein the window is configured to default to the transparent state.

6. An overhead stowage bin section, comprising:
a first stowage bin including a first door, a first top panel (304a), a first bottom panel (304b), a first side panel, and a second side panel configured to define a first volume for stowing luggage;
a second stowage bin including a second door, a second top panel (304a), a second bottom panel, the first side panel, and a third side panel configured to define a second volume for stowing luggage;
a first window disposed in the first door, the first window configured to transition from a first state to a second state; and
a second window disposed in the second door, the second window configured to transition from the first state to the second state.

7. The overhead stowage bin section of claim 6, wherein the first state is a transparent state and the second state is an opaque state, and optionally wherein the first window includes a polymer dispersed liquid crystal film that is configured to transition from the transparent state to the opaque state in response to application of an electric current.

8. The overhead stowage bin section of claim 6 or 7, further comprising:
a first control button; and
a first controller configured to control a state of the first window, the first controller sending a current to the first window in response to the first control button being pressed a first time.

9. The overhead stowage bin section of claim 8, wherein the first controller is further configured to stop sending the current to the first window in response to the first control button being pressed a second time.

10. The overhead stowage bin section of claim 8, further comprising:
a second control button; and
a second controller configured to control a state of the second window, the second controller being configured to send the current to the second window in response to the second control button being pressed, and optionally wherein the second controller is configured to receive a signal from a central controller and send the current to the second window in response to receiving the signal.

11. A system, comprising:
a first overhead stowage bin including a first door having a first window, wherein the first window is configured to transition between a first transparency state and a second transparency state;
a first controller configured to control the transition of the first window;
a stowage bin controller;
a processor; and
a memory operatively coupled to the processor, the memory comprising instructions stored thereon that, when executed by the processor, cause the processor to:
receive a first request from the stowage bin controller to change a state of the first window;
send a second request to the first controller to transition the first window from the first transparency state to the second transparency state;
receive a first response from the first controller indicating the state of the first window; and
send a first confirmation to the stowage bin controller.

12. The system of claim 11, further comprising:
a second overhead stowage bin including a second door having a second window, wherein the second window is configured to transition between the first transparency state and the second transparency state; and
a second controller configured to control the transition of the second window,
wherein the instructions, when executed by the processor, further cause the processor to:
receive a third request from the stowage bin controller to change the state of the second window;
send a fourth request to the second controller to transition the second window from the first transparency state to the second transparency state;
receive a second response from the second controller indicating the state of the second window; and
send a second confirmation to the stowage bin controller.

13. The system of claim 11 or 12, wherein the first transparency state is a transparent state and the second transparency state is an opaque state.

14. The system of any of claims 11 to 13, wherein the stowage bin controller is a pilot controller in a cockpit of an aircraft, or wherein the stowage bin controller is a flight attendant controller in an aircraft.

15. The system of any of claims 11 to 14, further comprising:
a first transparent shield disposed over a first side of the first window; and
a second transparent shield disposed over a second side of the first window, the second side being opposite the first side.
